# EUROPÄISCHE PATENTANMELDUNG

(11) **EP 3 364 174 A1**
(43) Veröffentlichungstag der Anmeldung: **22.08.2018**
(21) Anmeldenummer: 17156354.7
(22) Anmeldetag: 15.02.2017
(51) Int. Cl.: G01N 21/952, G01N 21/954

(54) **OPTISCHES INSPEKTIONSSYSTEM UND VERFAHREN ZUR OPTISCHEN INSPEKTION EINES PRÜFLINGS**

(71) Anmelder: Koller, Christian, 5442 Fislisbach (CH)
(72) Erfinder: Koller, Christian, 5442 Fislisbach (CH)
(74) Vertreter: Dittmann, Rolf

(57) **Zusammenfassung**

Beschrieben ist ein optisches Inspektionssystem. Dieses umfasst eine Bildaufnahmevorrichtung (11), wobei ein Sichtfeld der Bildaufnahmevorrichtung entlang einer Draufsichtrichtung (10) zu einem Inspektionsvolumen hin gerichtet ist. Im Sichtfeld und in Draufsichtrichtung proximal vom Inspektionsvolumen ist wenigstens ein Innenansicht-Strahlumlenkelement (13) angeordnet, wobei das Innenansicht-Strahlumlenkelement derart ausgeführt ist, um, wenn sich ein Prüfling (1) im Inspektionsvolumen befindet, Innenwände, die einen Hohlraum des Prüflings begrenzen, auf die Bildaufnahmevorrichtung (11) zu projizieren, wenn sich der Prüfling derart im Inspektionsvolumen befindet, dass der Hohlraum zur Draufsichtrichtung hin offen ist. Innerhalb des Sichtfeldes ist wenigstens ein Seitenansicht-Strahlumlenkelement (15) angeordnet, welches, bezogen auf die Draufsichtrichtung, seitlich des Inspektionsvolumens angeordnet ist. Das Seitenansicht-Strahlumlenkelement ist weiterhin derart angeordnet und positioniert, um eine, bezogen auf die Draufsichtrichtung, seitliche Aussenansicht eines Prüflings, der sich im Inspektionsvolumen befindet, in das Sichtfeld umzulenken und auf die Bildaufnahmevorrichtung zu projizieren.

## Beschreibung

### TECHNISCHES GEBIET

Die vorliegende Beschreibung betrifft ein optisches Inspektionssystem der in Anspruch 1 beschriebenen Art. Sie betrifft weiterhin ein Verfahren zur optischen Inspektion eines Prüflings, wie es im unabhängigen Verfahrensanspruch beschrieben ist.

### TECHNOLOGISCHER HINTERGRUND

Optische Inspektionssysteme zur Prüfung von Werkstücken sind in vielen Bereichen der Industrie verbreitet. Beispielhaft genannt sei die Prüfung von Halbzeugen und fertiggestellten Produkten bei der Produktion von Kunststoff-Getränkeflaschen. Ebenso müssen die Verschlüsse für die Kunststoff-Getränkeflaschen im Sinne einer Qualitätssicherung fortlaufend kontrolliert werden. Während die Getränkeflaschen häufig durchsichtig oder zumindest durchscheinend sind, bestehen die Verschlüsse meist aus opaken Werkstoffen. Gleichwohl muss einerseits das Äussere der Verschlüsse überprüft werden, andererseits muss auch das Innere der Verschlüsse mit den darin angeordneten Gewindegängen den Qualitätsanforderungen entsprechen. Es ist demnach wünschenswert, beispielsweise bei den Verschlüssen in der Lage zu sein, simultan den äusseren Umfang der Verschlüsse wie auch das Innere mit den Gewinden inspizieren zu können.

Auch bei der Herstellung und Bestückung von Platinen ist es wünschenswert, die Platinen optisch zu inspizieren. Auch bei diesem Anwendungsfall kommen Hinterschneidungen vor, beispielsweise zwischen elektronischen Bauteilen auf bestückten Platinen und der Platine selbst.

Ebenso kann eine dreidimensionale Darstellung der zu inspizierenden Gegenstände wünschenswert sein.

Aus der EP 2 112 502 sind ein Verfahren und eine Vorrichtung zur Prüfung von Behälter-Preforms bekannt geworden. Bei der dort offenbarten Vorrichtung werden die Prüflinge von einem Förderband durch die Prüfvorrichtung transportiert. In einer Ebene, die zu derjenigen des Förderbandes parallel ist, sind drei Kameras als drei Bildaufnahmevorrichtungen mit unterschiedlichen Sichtfeldern und Sichtrichtungen in einem Winkel von jeweils 120° zueinander versetzt angeordnet, wobei sich die Sichtfelder der Kameras überschneiden und so in Ihrem Überschneidungsbereich ein Inspektionsvolumen definieren. Eine weitere Kamera ist angeordnet, um die Prüflinge auch von unten zu inspizieren. Weiterhin kann eine fünfte Kamera angeordnet sein, um die Prüflinge von oben zu inspizieren. Es ist somit ein hoher Aufwand an Kameras erforderlich, die im Weiteren auch relativ zueinander justiert werden müssen. Ebenso ist keine Inspektion des Inneren und insbesondere der Innenwände eines opaken Hohlkörpers möglich.

Die DE 103 12 051 und die US 2008/0013820 offenbaren Vorrichtungen, bei denen mithilfe optischer Systeme der Aussenumfang eines Prüflings auf eine Bildaufnahmevorrichtung projiziert wird. Es ist somit möglich, jeweils die gesamte Mantelfläche eines Prüflings mit einer einzigen als Bildaufnahmevorrichtung angeordneten Kamera zu erfassen. Mit den dort vorgeschlagenen Vorrichtungen ist jedoch keine Inspektion des Inneren eines Hohlkörpers möglich. Im Weiteren ist bei den vorgeschlagenen Vorrichtungen der Strahlengang jeweils derart orientiert, dass von der Kamera wegweisende Hinterschneidungen an der Aussenfläche des Prüflings nicht sichtbar sind.

Mit der in der EP 1 887 345 vorgeschlagenen Vorrichtung ist es möglich, gleichzeitig die äussere Mantelfläche eines Prüflings als auch deren Draufsicht zu erfassen. Jedoch bietet die dort vorgeschlagenen Vorrichtung keine Möglichkeit, beispielsweise ein im Inneren eines Prüflings angeordnetes Gewinde mit den Hinterschneidungen der Gewindegänge zu inspizieren. Ebenso sind die Strahlengänge an der Mantelfläche derart geführt, dass von der Kamera wegweisende Hinterschneidungen an der Mantelfläche nicht sichtbar sind.

Gemäss der Lehre der GB 2 318 635 ist eine Reflektoranordnung derart vorgesehen, dass vom Inneren eines Hohlkörpers schräg ausgehende Strahlengänge zu einer als Bildaufnahmevorrichtung angeordneten Kamera umgelenkt werden. Derart werden Innenwände, die einen Hohlraum des Prüflings begrenzen, auf die Bildaufnahmevorrichtung projiziert. Es ist somit ermöglicht, beispielsweise die Gewinde innerhalb eines Flaschenverschlusses zu inspizieren. Allerdings erlaubt die in der GB 2 118 635 beschriebene Vorrichtung nicht die Inspektion der äusseren Mantelfläche des Prüflings.

Es ist aus dem Stand der Technik kein optisches Inspektionssystem bekannt, welches mit einer einzigen Bildaufnahmevorrichtung gleichzeitig die Inspektion der inneren Wandlungen als auch der äusseren Mantelfläche eines Prüflings ermöglicht. Bei einer Kombination der Lehren der vorstehend zitierten Dokumente ergibt sich die Problematik, dass eine Reflektoranordnung zur Inspektion des Inneren des Prüflings einen grossen Teil des Sichtfelds der Bildaufnahmevorrichtung, beispielsweise einer einzelnen Kamera oder einer Mehrzahl von Kameras mit einem gemeinsamen Sichtfeld, blockiert. Die Strahlengänge, die zur Inspektion der Mantelfläche erforderlich sind, müssen daher sehr weit aussen am Inspektionssystem geführt werden. Dies erfordert einerseits ein sehr grosses Sichtfeld der Bildaufnahmevorrichtung mit einer Weitwinkelauslegung, oder einen sehr grossen Abstand der Bildaufnahmevorrichtung vom Prüfling. Letzteres ist aufgrund von Begrenzungen der Baugrösse, aber auch aufgrund von erhöhten Vibrationsanfälligkeiten, problematisch. Wird hingegen eine sehr stark weitwinklige Auslegung der Bildaufnahmevorrichtung gewählt, so wird das Innere des Prüflings im Zentrum des Sichtfeldes erfasst, die Mantelfläche hingegen an der Peripherie des Sichtfeldes. Aufgrund der Strahlumlenkung ergeben sich dabei sehr stark unterschiedliche Objektentfernungen bei der Inspektion des Inneren des Prüflings und der äusseren Mantelfläche. Die Entfernung entlang eines Strahlengangs von der Bildaufnahmevorrichtung zur Mantelfläche ist in diesem Falle, wie der Fachmann leicht nachvollziehen kann, erheblich grösser als die Entfernung entlang eines Strahlengangs zu einer inneren Wandung des Prüflings. Mit einer einzigen Bildaufnahmevorrichtung zur Bilderfassung müssen daher starke Abstriche hinsichtlich der scharfen Abbildung des gesamten Prüflings gemacht werden.

### DARSTELLUNG DES GEGENSTANDES DER VORLIEGENDEN BESCHREIBUNG

Im Rahmen der vorliegenden Beschreibung sollen ein optisches Inspektionssystem und ein Verfahren zur optischen Inspektion eines Prüflings angegeben werden. Gemäss einem Aspekt des vorliegend beschriebenen Gegenstandes soll die Vorrichtung eine Qualitätskontrolle der Bauteile in Echtzeit ermöglichen. Gemäss einem weiteren Aspekt soll es möglich sein, bei Bauteilen, die einen Hohlraum aufweisen, simultan das Innere des Hohlraums, insbesondere die Innenwände, die den Hohlraum begrenzen, sowie die äussere Mantelfläche des Bauteils mittels des optischen Inspektionssystems zu erfassen. Gemäss einem weiteren Aspekt soll es möglich sein, jeden erfassten Bereich eines Prüflings mit einer hinreichenden Bildschärfe zu erfassen, die es ermöglicht, auch feine Details sichtbar werden zu lassen, und somit die Gewährleistung höchster Qualitätsansprüche an die Oberflächen zu ermöglichen.

Dies wird mittels der im Anspruch 1 beschriebenen Vorrichtung sowie dem im unabhängigen Verfahrensanspruch beschriebenen Verfahren erreicht.

Weitere Wirkungen und Vorteile der hier beschriebenen Gegenstände, ob explizit angegeben oder nicht, ergeben sich im Lichte der vorliegenden Beschreibung.

Offenbart ist demnach ein optisches Inspektionssystem, umfassend eine Bildaufnahmevorrichtung, wobei ein Sichtfeld der Bildaufnahmevorrichtung entlang einer Draufsichtrichtung zu einem Inspektionsvolumen hin gerichtet ist. Im Sichtfeld und in Draufsichtrichtung proximal vom Inspektionsvolumen ist wenigstens ein Innenansicht-Strahlumlenkelement angeordnet. Das wenigstens eine Innenansicht-Strahlumlenkelement ist derart ausgeführt, um, wenn sich ein Prüfling im Inspektionsvolumen befindet, Innenwände, die einen Hohlraum des Prüflings begrenzen, auf die Bildaufnahmevorrichtung zu projizieren falls sich der Prüfling derart im Inspektionsvolumen befindet, dass der Hohlraum zur Draufsichtrichtung hin offen ist. Insbesondere ist das Innenansicht-Strahlumlenkelement in bestimmten Ausführungsformen im Zentrum des Sichtfeldes angeordnet bzw. eine Mehrzahl von Innenansicht-Strahlumlenkelementen ist konzentrisch zum Sichtfeld um das Zentrum des Sichtfelds angeordnet. Die Begriffe proximal und distal werden im Zusammenhang mit der vorliegenden Offenbarung derart benutzt, dass proximal entlang der Draufsichtrichtung zur Bildaufnahmevorrichtung hin bedeutet, und distal entlang der Draufsichtrichtung von der Bildaufnahmevorrichtung weg. Proximal vom Inspektionsvolumen bedeutet in diesem Zusammenhang also beispielsweise, näher an der Bildaufnahmevorrichtung angeordnet als das Inspektionsvolumen, und in speziellen Zusammenhängen zwischen dem Inspektionsvolumen und der Bildaufnahmevorrichtung angeordnet. Weiterhin ist innerhalb des Sichtfeldes wenigstens ein Seitenansicht-Strahlumlenkelement angeordnet, welches bezogen auf die Draufsichtrichtung seitlich des Inspektionsvolumens angeordnet ist. Das Seitenansicht-Strahlumlenkelement ist weiterhin derart angeordnet und positioniert, um eine, bezogen auf die Draufsichtrichtung, seitliche Aussenansicht eines Prüflings, der sich im Inspektionsvolumen befindet, in das Sichtfeld umzulenken und auf die Bildaufnahmevorrichtung zu projizieren, derart, dass ein Strahlengang, der von einer seitlichen Aussenansicht eines im Inspektionsvolumen befindlichen Prüflings ausgeht, durch das Seitenansicht-Strahlumlenkelement so umgelenkt wird, dass der genannte umgelenkte Strahlengang sich innerhalb des Sichtfelds befindet, und die seitliche Aussenansicht auf die Bildaufnahmevorrichtung projiziert wird. Es kann vorgesehen sein, dass eine Mehrzahl von wenigstens 2 Seitenansicht-Strahlumlenkelementen an unterschiedlichen Umfangsposition des Inspektionsvolumens angeordnet sind, wobei sich der genannte Umfang um die Draufsichtrichtung erstreckt. In spezifischeren Ausführungsformen sind gesamthaft wenigstens drei Seitenansicht-Strahlumlenkelemente angeordnet, wobei diese derart angeordnet sind, um einen gesamten um die Draufsichtrichtung umlaufenden Seitenumfang eines Prüflings abzubilden. Beispielsweise sind diese in der Umfangsrichtung um jeweils 120° zueinander versetzt angeordnet, und weiterhin insbesondere auf ein gemeinsames Zentrum ausgerichtet. In anderen Ausführungsformen ist das wenigstens eine Seitenansicht-Strahlumlenkelement ausgebildet und angeordnet, um einen gesamten Umfang des Inspektionsvolumens auf die Bildaufnahmevorrichtung zu projizieren, wobei sich der genannte Umfang um die Draufsichtrichtung erstreckt. Es kann zum Beispiel vorgesehen sein, dass ein Seitenansicht-Strahlumlenkelement selbst eine Umfangserstreckung aufweist, also beispielsweise ein konkaver kegelstumpfförmiger Spiegel ist. Das wenigstens eine Seitenansicht-Strahlumlenkelement ist in einem Bereich des Sichtfeldes angeordnet, der nicht von dem Innenansicht-Strahlumlenkelement abgeschattet ist. Die Bildaufnahmevorrichtung umfasst wenigstens eine Lichtfeldkamera.

Der Begriff "projizieren" wird in diesem Zusammenhang derart gebraucht, dass er die Führung eines Strahlengangs von einem Objekt zu der Bildaufnahmevorrichtung bzw. in eine bestimmte Richtung beschreibt.

Der Abstand zwischen dem Inspektionsvolumen und der Bildaufnahmevorrichtung darf aus verschiedenen Gründen nicht beliebig gross sein. Da weiterhin das Seitenansicht-Strahlumlenkelement innerhalb des Sichtfeldes der Bildaufnahmevorrichtung nicht vom Innenansicht-Strahlumlenkelement abgeschattet sein darf, ist für den Fachmann klar, dass das wenigstens eine Aussenansicht-Strahlumlenkelement vergleichsweise weit seitlich des Inspektionsvolumens angeordnet sein muss. "Seitlich" bedeutet in diesem Zusammenhang bezogen auf die Draufsichtrichtung lateral versetzt vom Zentrum des Sichtfeldes und/oder dem Innenansicht-Strahlumlenkelement. Der Abstand zwischen dem Inspektionsvolumen und der Bildaufnahmevorrichtung ist beispielsweise deshalb begrenzt, weil selbstverständlich einerseits der zur Verfügung stehende Bauraum begrenzt sein kann. Andererseits wird auch ohne Weiteres klar, dass, je weiter die Bildaufnahmevorrichtung vom Inspektionsvolumen entfernt ist, Vibrationen und Erschütterungen die Abbildungsqualität und -stabilität negativ beeinflussen. Aus diesen Zusammenhängen wiederum ergibt sich, dass die Länge eines Strahlengangs von einer äusseren Seitenfläche des Prüflings über das Seitenansicht-Strahlumlenkelement zur Bildaufnahmevorrichtung signifikant grösser ist als die Länge eines Strahlengangs von einem Objektpunkt innerhalb des Prüflings oder von einer Draufsicht des Prüflings über das Innenansicht-Strahlumlenkelement zur Bildaufnahmevorrichtung. Es ist damit schwierig, gleichzeitig sowohl die Innenansicht als auch die Aussenansicht des Prüflings scharf abzubilden. Auch ein Blendenwert der Bildaufnahmevorrichtung kann nicht beliebig klein gewählt werden, da bei einem Inspektionssystem der genannten Art die Prüflinge häufig mit einer hohen Geschwindigkeit durch das Inspektionsvolumen geführt werden, derart, dass nur eine geringe Belichtungszeit zur Verfügung steht. Die Verwendung wenigstens einer Lichtfeldkamera, auch plenoptische Kamera genannt, ermöglicht es, aus den in der Bildaufnahmevorrichtung erfassten Daten in Echtzeit Bilder zu erzeugen, bei denen der Abstand der scharf abgebildeten Gegenstände von der Bildaufnahmevorrichtung unterschiedlich gross ist. Es ist möglich, an verschiedenen Bildpunkten unterschiedliche scharf abbildende Objektdistanzen auszuwählen, und somit eine scharfe Abbildung des gesamten Prüflings zu erzeugen und Vibrationsverzerrungen zu vermeiden.

Eine plenoptische Kamera oder Lichtfeldkamera der hier verwendeten Art ist beispielsweise im Artikel von Edward H. Adelson und John Y. A. Wang, "Single Lens Stereo with a Plenoptic Camera", IEEE Transactions on Pattern Analysis and Machine Intelligence, Vol. 14, No. 2, Februar 1992, beschrieben. Die WO 2013/030002 beschreibt die Verwendung einer plenoptischen Kamera oder Lichtfeldkamera für die dreidimensionale Sichtprüfung eines Bauteils. Gemäss der Offenbarung dieses Dokumentes wird eine einfache Aufnahme eines dreidimensionalen Bauteils gemacht, und diese wird derart ausgewertet, dass eine Abbildung des Bauteils auf einem Bildschirm in verschiedene Ansichten drehbar ist. Eine simultane optische Inspektion eines Bauteilinneren sowie des Mantels eines Bauteils wird nicht offenbart oder erwähnt.

Eine Bildaufnahmevorrichtung kann in bestimmten Ausführungsformen eine einzelne Kamera oder ein einzelner optischer Sensor sein. In anderen Ausführungsformen kann die Bildaufnahmevorrichtung auch zwei oder mehr Kameras und/oder optische Sensoren umfassen, wobei die auf die Bildaufnahmevorrichtung projizierten Ansichten des Prüflings zum Beispiel mittels eines Strahlteilers oder eines sonstigen geeigneten Mittels an alle Kameras und/oder Sensoren weitergeleitet werden. Die Anordnung von zwei oder mehr Kameras und/oder optischen Sensoren erlaubt bedarfsweise eine Erhöhung der zeitlichen und/oder räumlichen Auflösung der Bilderfassung. Die Bildaufnahmevorrichtung zeichnet sich gemäss einem Aspekt der vorliegenden Beschreibung dadurch aus, dass sie ein Sichtfeld aufweist, das zumindest im Wesentlichen entlang einer einzigen Sichtrichtung als Haupt-Sichtrichtung orientiert ist, wobei das Sichtfeld selbst divergent oder auch konvergent sein kann. In einer anderen Sichtweise weist die Bildaufnahmevorrichtung eine einzige Eintrittsöffnung auf, durch die alle Kameras und/oder Sensoren belichtet werden. In noch einer anderen Sichtweise sind die Sichtfelder aller Kameras und/oder Sensoren innerhalb der Bildaufnahmevorrichtung, gegebenenfalls über Strahlumlenkelemente und/oder Strahlteiler, auf einen einzigen ebenen Flächenbereich ausgerichtet, wobei alle Strahlengänge, über die die Ansichten des Prüflings projiziert werden, durch eben diesen Flächenbereich verlaufen. Dieser Flächenbereich stellt dann in einer Sichtweise die Eintrittsöffnung der Bildaufnahmevorrichtung dar. In spezifischen Ausführungsformen ist die Bildaufnahmevorrichtung derart aufgebaut, dass identische projizierte Ansichten des Prüflings an wenigstens zwei Kameras und/oder Sensoren weitergeleitet und von diesen erfasst werden; eine solche Ausführungsform ermöglicht beispielsweise eine gegenüber einem einzelnen Sensor oder einer einzelnen Kamera verbesserte zeitliche Auflösung. In spezielleren Ausführungsformen kann vorgesehen sein, dass identische projizierte Ansichten des Prüflings an alle Kameras und/oder Sensoren der Bildaufnahmevorrichtung weitergeleitet und von diesen erfasst werden. Es kann gemäss anderer Aspekte der vorliegend beschriebenen Gegenstände weiterhin, zusätzlich oder alternativ, vorgesehen sein, dass die Bildaufnahmevorrichtung derart aufgebaut ist, dass wenigstens zwei Kameras und/oder Sensoren unterschiedliche Segmente des vorstehend genannten Flächenbereichs erfassen, wobei die Segmente sich durchaus auch überlappen können; eine solche Ausführungsform ermöglicht beispielsweise eine gegenüber einem einzelnen Sensor oder einer einzelnen Kamera verbesserte räumliche Auflösung. In spezielleren Ausführungsformen kann vorgesehen sein, dass alle Kameras und/oder Sensoren der Bildaufnahmevorrichtung unterschiedliche Flächensegmente erfassen. Die genannten Beispiele für die Ausgestaltung einer Bildaufnahmevorrichtung sind nicht abschliessend; es sind auch nicht explizit genannte Ausgestaltungen möglich.

Der Begriff "Strahlumlenkelement" ist im Zusammenhang mit der vorliegenden Offenbarung breit zu verstehen, sofern nichts Abweichendes explizit angegeben ist. Ein Seitenansicht-Strahlumlenkelement oder ein Innenansicht-Strahlumlenkelement kann beispielsweise ein Spiegel oder eine Spiegelanordnung sein, ein Prisma, ein Fischauge oder auch ein Bildleiter, wobei diese Aufzählung nicht als umfassend oder einschränkend zu verstehen ist. Ebenso kann vorgesehen sein, dass wenigstens eines der Seitenansicht-Strahlumlenkelemente und/oder eines der Innenansicht-Strahlumlenkelemente eine ebene oder gewölbte Reflexionsfläche aufweist.

Die Sichtrichtung der Bildaufnahmevorrichtung kann von der Draufsichtrichtung abweichen und beispielsweise durch ein weiteres Strahlumlenkelement in die Draufsichtrichtung projiziert sein. Entsprechend kann auch das Sichtfeld der Bildaufnahmevorrichtung von der Sichtrichtung in die Draufsichtrichtung umgelenkt sein.

Es ist zu erwähnen, dass der Prüfling kein Bestandteil des vorliegend beschriebenen Gegenstandes ist, sondern nur zur funktionellen Beschreibung von Bestandteilen des beschriebenen Gegenstandes dient. Es ergibt sich für den Fachmann weiterhin vollkommen zwanglos, dass das Inspektionsvolumen eine Schnittmenge der von dem oder den Innenansicht-Strahlumlenkelement/en und dem oder den Aussenansicht-Strahlumlenkelement/en abgebildeten Bereichen darstellt.

In häufig vorkommenden Fällen ist die Draufsichtrichtung zumindest näherungsweise geodätisch von oben nach unten orientiert, was aber keinesfalls einschränkend zu verstehen ist.

Offenbart ist demnach auch ein Verfahren zur optischen Inspektion eines Prüflings, das umfasst, einen Prüfling in ein Inspektionsvolumen einzubringen, das Sichtfeld einer Bildaufnahmevorrichtung entlang einer Draufsichtrichtung auf das Inspektionsvolumen zu richten, eine Seitenansicht des Prüflings auf die Bildaufnahmevorrichtung zu projizieren, wenigstens eine schräg zur Draufsichtrichtung orientierte Draufsicht des Prüflings auf die Bildaufnahmevorrichtung zu projizieren, und mit der Bildaufnahmevorrichtung die Ansichten des Prüflings derart aufzunehmen, dass Abbildungen des Prüflings mit unterschiedlichem Schärfeabstand von der Bildaufnahmevorrichtung zur Verfügung gestellt werden können. Es versteht sich in diesem Zusammenhang von selbst, dass eine schräg zur Draufsichtrichtung orientierte Draufsicht eines Prüflings, welcher mit einer Öffnung zur Draufsichtrichtung hin orientiert ist, die Innenwände abbildet, welche einen zur Draufsichtrichtung hin offenen Hohlraum im Inneren des Prüflings begrenzen. Insbesondere wird mittels der Bildaufnahmevorrichtung wenigstens ein 4D-Lichtfeld des Prüflings aufgenommen.

Das vorliegend beschriebene Inspektionssystem und das vorliegend beschriebene Verfahren ermöglichen es demnach, simultan eine Aussenansicht sowie eine Innenansicht und/oder Draufsicht eines Prüflings mit einer einzigen Bildaufnahmevorrichtung zu erfassen.

In einer Weiterbildung des beschriebenen Verfahrens werden die aufgenommenen Abbildungen derart weiterverarbeitet, dass alle abgebildeten Bereiche des Prüflings scharf abgebildet sind.

Mit einem aufgenommenen 4D-Lichtfeld ist es ebenso ermöglicht, ein dreidimensionales Modell des Prüflings, oder wenigstens der sichtbaren Bereiche des Prüflings, zu errechnen und darzustellen. Auch andere Rechenoperationen zur Auswertung des aufgenommenen 4D-Lichtfelds sind möglich.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

In bestimmten Ausführungsformen des optischen Inspektionssystems ist das Seitenansicht-Strahlumlenkelement derart anordenbar und positionierbar, um die seitliche Aussenansicht eines Prüflings, der sich im Inspektionsvolumen befindet, in einer Sichtrichtung mit einem Polarwinkel von wenigstens 90°, das heisst 90° oder grösser, gemessen von der Draufsichtrichtung, auf die Bildaufnahmevorrichtung zu projizieren. In bestimmten Ausführungsformen ist das Seitenansicht-Strahlumlenkelement derart angeordnet und positioniert, um die seitliche Aussenansicht eines Prüflings, der sich im Inspektionsvolumen befindet, in einer Sichtrichtung mit einem Polarwinkel von wenigstens 90°, das heisst 90° oder grösser, gemessen von der Draufsichtrichtung, auf die Bildaufnahmevorrichtung zu projizieren. Es ist somit möglich, auch Unterschneidungen an der äusseren Mantelfläche des Prüflings abzubilden, welche in die distale Richtung, also von der Bildaufnahmevorrichtung weg und zum Prüfling hin, weisen. Dies kann realisiert sein, indem das Seitenansicht-Strahlumlenkelement sich entlang der Draufsichtrichtung wenigstens bis zu einer distalen Begrenzung des Inspektionsvolumens erstreckt. Es ist offensichtlich, dass gerade bei dieser Anordnung die Problematik der stark unterschiedlichen Objektabstände entlang verschiedener Strahlengänge weiter akzentuiert ist. Dies kann aber durch die genannte Verwendung wenigstens einer Lichtfeldkamera als Bestandteil einer Bildaufnahmevorrichtung oder als Bildaufnahmevorrichtung selbst durchaus gehandhabt werden.

"Anordenbar" und "positionierbar" ist in diesem Zusammenhang derart zu verstehen, dass das Inspektionssystem derart aufgebaut ist, dass es ermöglicht ist, das Seitenansicht-Strahlumlenkelement in der genannten Art anzuordnen zu positionieren, nämlich derart, um die seitliche Aussenansicht eines Prüflings, der sich im Inspektionsvolumen befindet, in einer Sichtrichtung mit einem Polarwinkel von wenigstens 90°, das heisst 90° oder grösser, gemessen von der Draufsichtrichtung, auf die Bildaufnahmevorrichtung zu projizieren. In spezifischeren beispielhaften Ausführungsformen zeichnet sich das Inspektionssystem dadurch aus, dass es zumindest den Platz aufweist, um das Seitenansicht-Strahlumlenkelement in der genannten Art anzuordnen zu positionieren, nämlich derart, um die seitliche Aussenansicht eines Prüflings, der sich im Inspektionsvolumen befindet, in einer Sichtrichtung mit einem Polarwinkel von wenigstens 90°, das heisst 90° oder grösser, gemessen von der Draufsichtrichtung, auf die Bildaufnahmevorrichtung zu projizieren. In spezifischeren Ausführungsformen ist beispielsweise das Seitenansicht-Strahlumlenkelement verschieblich angeordnet, wobei die Verschieblichkeit eine Positionierung und Anordnung des Seitenansicht-Strahlumlenkelements in der genannten Art ermöglicht. In anderen beispielhaften spezifischen Ausführungsformen ist eine Halterungsvorrichtung für ein Seitenansicht-Strahlumlenkelement angeordnet, welche es ermöglicht, das Seitenansicht-Strahlumlenkelement in der genannten Art anzuordnen und zu positionieren.

In weiteren beispielhaften Ausführungsformen ist eine distale Begrenzung des Inspektionsvolumens in der Draufsichtrichtung relativ zur Lage eines Positionierungsmittels für einen Prüfling definiert. In beispielshaften Ausführungsformen kann ein Transportband vorgesehen sein, auf dem Prüflinge durch das Inspektionsvolumen transportiert werden, wobei die Draufsichtrichtung auf die Oberfläche des Transportbandes gerichtet ist. Es ist insofern ohne Weiteres klar, dass das Transportband in diesem Falle die distale Begrenzung des Inspektionsvolumens darstellt. In anderen beispielhaften Ausführungsformen kann eine Greifvorrichtung zum Positionieren eines spezifischen Prüflings im Inspektionsvolumen vorgesehen sein. Eine Erstreckung des Prüflings bzw. eines zu inspizierenden Bereichs des Prüflings in die distale Richtung gibt dann eine Begrenzung desjenigen Bereichs vor, in dem eine Sichtprüfung möglich sein muss, definiert also eine distale Begrenzung des Inspektionsvolumens.

Unabhängig davon können die Grenzen des Inspektionsvolumens in anderen Ausführungsformen als durch einen Bereich vorgegeben betrachtet werden, in dem eine Sicht auf einen Prüfling unter vorgegebenen und für die Inspektion notwendigen Sichtwinkeln innerhalb des von der Bildaufnahmevorrichtung erfassten Sichtfeldes ermöglicht ist. Da das beschriebene Inspektionssystem ja im Allgemeinen für die Sichtkontrolle eines ganz bestimmten Gegenstandes bzw. einer abgeschlossenen Menge an Gegenständen bereitgestellt und eingerichtet wird, und weiterhin für die jeweiligen Anwendungsfälle vorgegeben ist, welche Bereiche eines Gegenstandes unter welche Sichtwinkeln überprüft werden sollen, ist für den Fachmann jederzeit klar, wo bei einer bestimmten Anordnung der optischen Komponenten des Inspektionssystems das Inspektionsvolumen angeordnet und begrenzt ist. Ebenso ist zumindest in der überwiegenden Anzahl der Anwendungen eine Transportvorrichtung in einem funktionalen Zusammenhang mit dem Inspektionssystem angeordnet. Die Transportvorrichtung ist insbesondere dazu vorgesehen, einen Prüfling in das Inspektionsvolumen hinein und wieder hinaus, oder durch das Inspektionsvolumen hindurch, zu transportieren. Auch hier ergibt sich, für einen bestimmten zu inspizierenden Gegenstand oder eine abgeschlossene Menge oder Klasse zu inspizierender Gegenstände, in Relation zu der Transportvorrichtung eine genaue Definition der Lage und Begrenzung des Inspektionsvolumens: Es muss sich während des Transports der Prüflinge einmal jeweils der gesamte zu inspizierende Gegenstand und/oder der zu inspizierende Bereich eines Gegenstandes im Inspektionsvolumen befinden. Bei der Inspektion vergleichsweise grosser Gegenstände, wie beispielsweise Polyethylen-Halbzeugen zur Herstellung von Getränkeflaschen oder Platinen, kann vorgesehen sein, dass der Gegenstand in mehreren Schritten bereichsweise inspiziert und/oder von der Bildaufnahmevorrichtung gescannt wird. Damit sind die Grenzen eines mindestens erforderlichen Inspektionsvolumens also vorgegeben. Der Fachmann erhält demnach im Rahmen der Offenbarung des vorliegenden Dokumentes, und bei angemessener und sachgerechter Würdigung des technischen Gebiets, eine klare und eindeutige technische Lehre zur Anordnung der Komponenten des offenbarten optischen Inspektionssystems relativ zueinander.

Gemäss weiterer Aspekte der hier beschriebenen technischen Lehre ist das wenigstens eine Seitenansicht-Strahlumlenkelement derart anordenbar bzw. angeordnet und vorgesehen, um ein virtuelles Bild einer seitlichen Aussenansicht eines im Inspektionsvolumen befindlichen Prüflings und/oder eines Prüfbereichs zu erzeugen, wobei dieses virtuelle Bild im Sichtfeld der Bildaufnahmevorrichtung angeordnet ist, und wobei das virtuelle Bild jedes Objektpunktes des Prüflings in Draufsichtrichtung weiter distal angeordnet ist als der jeweilige Objektpunkt am realen Objekt. Die Bedeutung des Begriffs "anordenbar" ergibt sich für den Fachmann eindeutig analog zu den oben gemachten Ausführungen zu diesem Begriff. Der Begriff eines virtuellen Bildes ist dem Fachmann geläufig, sei aber gleichwohl im Folgenden kurz erläutert. Ein virtuelles Bild ist als ein Bild eines Objektes zu verstehen, das ein Beobachter bzw. die Bildaufnahmevorrichtung in geradliniger Fortsetzung seines Blickes respektive eines Strahlengangs, der das Auge des Beobachters bzw. die Bildaufnahmevorrichtung erreicht, erkennt. Dabei ist ein virtuelles Bild, im Gegensatz zu einem reellen Bild, nicht ohne ein abbildendes System auf einem Schirm abbildbar. Beispiele für virtuelle Bilder sind, wobei die folgende Aufzählung nicht einschränkend verstanden werden darf:
- Bilder, die von Streulinsen erzeugt werden;
- Bilder, die von konvexen Spiegeln erzeugt werden;
- Bilder, die von Sammellinsen oder konkaven Spiegeln erzeugt werden, sofern der Abstand des Objektes von der optischen Komponente kleiner als deren Brennweite ist;
- Bilder hinter einem planen Spiegel;
- die scheinbare Position eines Objektes hinter einem Prisma;
- die scheinbare Position eines Objektes beim Blick auf einen Bildleiter.

Um dies zu erreichen kann in bestimmten Ausführungsformen des beschriebenen Gegenstandes vorgesehen sein, dass das wenigstens eine Seitenansicht-Strahlumlenkelement derart ausgeführt und anordenbar oder angeordnet ist, dass eine Winkelhalbierende der Strahlumlenkung bei der Projektion der Seitenansicht eines im Inspektionsvolumen befindlichen Prüflings auf die Bildaufnahmevorrichtung mit der Draufsichtrichtung einen Winkel einschliesst, der kleiner oder gleich 45° zuzüglich der Hälfte eines Öffnungshalbwinkels des Sichtfeldes ist. In weiteren Ausführungsformen ist der genannte Winkel kleiner als 45° zuzüglich der Hälfte eines Öffnungshalbwinkels des Sichtfeldes. In spezifischeren Ausführungsformen ist dieser Winkel kleiner als oder gleich 45°, und weiterhin insbesondere kleiner als 45°. Mit anderen Worten werden Objektpunkte vom Äusseren eines Prüflings auf die Bildaufnahmevorrichtung projiziert, bei denen die hierfür erforderliche Strahlumlenkung am Seitenansicht-Strahlumlenkelement einen spitzen Winkel oder maximal einen rechten Winkel einschliesst. Hieraus ergibt sich, dass tatsächlich in die distale Richtung weisende, also von der Bildaufnahmevorrichtung wegweisende Flächen eines Prüflings, von der Bildaufnahmevorrichtung erfassbar sind.

Das wenigstens eine Innenansicht-Strahlumlenkelement ist in beispielhaften Ausführungsformen derart ausgeführt und anordenbar oder angeordnet, dass eine Winkelhalbierende der Strahlumlenkung bei der Projektion einer Innenansicht eines im Inspektionsvolumen befindlichen Prüflings auf die Bildaufnahmevorrichtung mit der Draufsichtrichtung einen Winkel von wenigstens 45° einschliesst. Dieser Winkel ist also 45° oder grösser als oder gleich 45°. Es kann vorgesehen sein, dass dieser Winkel grösser als 45° ist. In spezifischeren Ausführungsformen ist das Innenansicht-Strahlumlenkelement derart angeordnet und ausgeführt, dass der genannte Winkel grösser oder gleich 45° plus der Hälfte des Öffnungshalbwinkels des Sichtfeldes ist. Noch spezifischer kann vorgesehen sein, dass der genannte Winkel grösser als 45° plus der Hälfte des Öffnungshalbwinkels des Sichtfeldes ist. Mit anderen Worten werden Objektpunkte vom Inneren eines Prüflings auf die Bildaufnahmevorrichtung projiziert, bei denen die hierfür erforderliche Strahlumlenkung am Innenansicht-Strahlumlenkelement einen stumpfen Winkel oder minimal einen rechten Winkel einschliesst.

Es kann vorgesehen sein, dass im Sichtfeld der Bildaufnahmevorrichtung, in spezifischeren Ausführungsformen im Zentrum des Sichtfelds, und in Draufsichtrichtung proximal vom Innenansicht-Strahlumlenkelement eine Vergrösserungsoptik angeordnet ist, welche die Abbildung der von der Innenansicht-Strahlumlenkvorrichtung auf die Bildaufnahmevorrichtung projizierten Objektbereiche vergrössert. Dies kann zum Beispiel eine Lupe oder Sammellinse sein, oder auch ein Fischauge, oder eine Kombination aus den genannten optischen Komponenten. Die Vergrösserungsoptik ermöglicht es, die Abbildung der von der Innenansicht-Strahlumlenkvorrichtung projizierten Objektbereiche in den Bereich des Sichtfeldes der Bildaufnahmevorrichtung hinein zu vergrössern, der ansonsten von der Innenansicht-Strahlumlenkvorrichtung oder deren Haltestruktur abgeschattet wäre. Wie leicht nachvollziehbar ist, und in den Ausführungsbeispielen dargelegt wird, ist ohne die genannte Vergrösserungsoptik ein Teil des Sichtfeldes auf eine Halterung für die Innenansicht-Strahlumlenkvorrichtung gerichtet. Entsprechend beinhaltet ein Teil der Bildpunkte der Bildaufnahmevorrichtung keine sinnvoll verwertbare Information. Gerade bei einer Lichtfeldkamera, wo für jeden abgebildeten Bildpunkt mehrere physische Bildpunkte oder Pixel verwendet werden, fällt ein solcher Verlust von auswertbaren Bildpunkten der Bildaufnahmevorrichtung signifikant ins Gewicht, indem die Auflösung der Abbildung spürbar reduziert wird. Eine entsprechende Vergrösserung der von der Innenansicht-Strahlumlenkvorrichtung projizierten Objektbereiche nutzt einen grösseren Bereich des Bildaufnehmers der Bildaufnahmevorrichtung aus und verbessert die Auflösung der Abbildung. Dabei weisst die Vergrösserungsoptik insbesondere eine Quererstreckung, bezogen auf die Draufsichtrichtung, auf, welche das Blickfeld auf das wenigstens eine Seitenansicht-Strahlumlenkelement nicht verdeckt. Es bezeichnet eine Innenansicht-Strahlumlenkvorrichtung die Gesamtheit aller Innenansicht-Strahlumlenkelemente und die Aussenansicht-Strahlumlenkvorrichtung die Gesamtheit aller Aussenansicht-Strahlumlenkelemente, die jeweils zur Projektion einer bestimmten Ansicht dienen.

In einer spezifischen Ausgestaltung sind die optischen Komponenten zur Abbildung der Draufsicht des Prüflings wie folgt angeordnet. Das Innenansicht-Strahlumlenkelement erzeugt ein virtuelles Bild der Draufsicht des Prüflings, respektive der Innenwände eines hohlen Prüflings. Eine Sammellinse als Vergrösserungsoptik ist derart relativ zum Innenansicht-Strahlumlenkelement angeordnet, dass die Brennweite der Sammellinse grösser ist als der Abstand einerseits zum virtuellen Bild der Draufsicht des Prüflings sowie zu einer zur Draufsichtrichtung hin orientierten Fläche des Prüflings. Damit werden die genannte Fläche des Prüflings sowie die vom Innenansicht-Strahlumlenkelement erzeugten virtuellen Bilder zu Objekten der Sammellinse. Dabei ist der Objektabstand kleiner als die Brennweite der Sammellinse. Die Sammellinse erzeugt somit ein vergrössertes aufrechtes virtuelles Bild dieser Objekte, das auf die Bilderfassungsvorrichtung projiziert wird. Insbesondere liegt der distale Brennpunkt der Vergrösserungslinse distal von der distalen Begrenzung des Inspektionsvolumens.

In diesem Zusammenhang ist auch eine Weiterbildung des beschriebenen Verfahrens offenbart, welches umfasst, die Draufsicht auf den Prüfling durch ein Abbildungssystem zu vergrössern.

Es sind weiterhin Ausführungsformen offenbart, in denen Vorrichtungen vorgesehen sind, die es erlauben, die Lichtintensität der Abbildung wenigstens eines von
1. Innenansicht und/oder Draufsicht des Prüflings und
2. Aussenansicht des Prüflings variabel abzuschwächen.

Hiermit ist es ermöglicht, auch dann, wenn die Aussenansicht im Vergleich zur Draufsicht und/oder Innenansicht für sich genommen schwächer oder auch stärker belichtet wäre, beide Ansichten mit einer homogenen und gleichmässigen Helligkeit auf die Bildaufnahmevorrichtung zu projizieren, und somit den Dynamikbereich der Bildaufnahmevorrichtung bestmöglich auszunutzen und Informationsverluste durch Überbelichtung oder Unterbelichtung bzw. durch Über- oder Untersteuerung der Bildaufnahmevorrichtung zu vermeiden.

In einer Ausführungsform des Inspektionssystems umfasst dieses eine Vorrichtung zur variablen Abschwächung einer Lichtintensität. Die Vorrichtung zur variablen Abschwächung der Lichtintensität ist hierbei in einem Strahlengang angeordnet, über den entweder
1. die Innenansicht und/oder Draufsicht des Prüflings oder
2. die Aussenansicht des Prüflings
auf die Bildaufnahmevorrichtung abgebildet wird. Es ist "entweder ... oder" im Sinne eines Exklusiv-Oder zu verstehen, in dem Sinne, dass zumindest eine Vorrichtung zur variablen Abschwächung einer Lichtintensität angeordnet ist, durch die exklusiv nur die Strahlengänge verlaufen, über die die Innenansicht/Draufsicht oder die Aussenansicht auf die Bildaufnahmevorrichtung abgebildet werden.

Entsprechend umfasst eine beispielhafte Ausführungsform des vorliegend beschriebenen Verfahrens, die Strahlengänge, entlang der eine erste der Ansichten - Aussenansicht oder Draufsicht bzw. Innenansicht - des Prüflings auf die Bildaufnahmevorrichtung projiziert wird, durch eine Vorrichtung zur variablen Abschwächung der Lichtintensität zu führen, die Bildhelligkeit an der Bildaufnahmevorrichtung derart einzustellen, dass die Helligkeit der Abbildung der zweiten der Ansichten des Prüflings in einem Sollintervall liegt, und die variable Abschwächung der Lichtintensität derart einzustellen, dass die Helligkeit der Abbildung der ersten Ansicht des Prüflings ebenfalls innerhalb des Sollintervalls liegt. Es sei insbesondere darauf hingewiesen, dass die ersten Strahlengänge, durch die die erste der Ansichten projiziert wird, durch eine Vorrichtung zur variablen Abschwächung der Lichtintensität geführt wird, durch die die Strahlengänge zur Projektion der zweiten der Ansichten nicht geführt werden.

In spezifischen Ausführungsformen ist die Vorrichtung zur variablen Abschwächung der Lichtintensität derart angeordnet und vorgesehen, um die Lichtintensität der Strahlengänge variabel zu gestalten, die von den Innenansicht-Strahlumlenkelementen bzw. der Innenansicht-Strahlumlenkvorrichtung auf die Bildaufnahmevorrichtung projiziert werden.

Die Vorrichtung zur variablen Abschwächung der Lichtintensität kann in einer nicht abschliessenden Aufzählung beispielsweise umfassen: einen variablen Graufilter, ein Flüssigkristall-Transmissionselement mit variabler Transmission, oder wenigstens zwei hintereinander in einem Strahlengang angeordnete Polarisationsfilter, beispielsweise Linear-Polarisatoren, welche relativ zueinander verdrehbar angeordnet sind, derart, dass ihre Polarisationsebenen relativ zueinander verdrehbar sind. In einer Ausführungsform ist dabei wenigstens ein Winkelbereich von 0°, d.h. parallele Polarisationsebenen, bis wenigstens 90°, d.h. zueinander senkrechte Polarisationsebenen, ermöglicht; auch andere Ausführungsformen mit Verstellbereichen von 0° bis und mit wenigstens 60°, 0° bis und mit wenigstens 45° oder 0° bis und mit wenigstens 30° sind möglich. Es kann ebenfalls der Fall sein, dass der kleinste Winkel zwischen den Polarisationsebenen grösser als 0° vorgesehen ist, eine parallele Einstellung der Polarisationsebenen also nicht möglich ist, was aber in einem Verlust an Dynamikbereich resultiert. Wie leicht nachvollziehbar ist, ist die Intensitätsabschwächung des durch die beiden Polarisationsfilter tretenden Lichts umso geringer, je kleiner der Winkel zwischen den beiden Polarisationsebenen ist, und wird umso grösser, je näher der Winkel zwischen den Polarisationsebenen der beiden Polarisationsfilter bei 90° liegt. Bei senkrechter Lage der Polarisationsebenen zueinander wäre die entsprechende Ansicht vollständig abgedunkelt, bei paralleler Lage wird die entsprechende Ansicht mit maximaler Intensität bzw. minimaler Intensitätsabschwächung auf die Bildaufnahmevorrichtung abgebildet.

In anderen Ausgestaltungen findet eine Kombination aus Linear- und Zirkularpolarisatoren Anwendung, wobei die Filter ebenfalls um ihre optischen Achsen relativ zueinander verdrehbar sind. Beispielsweise sind je ein Linear- und ein Polarisationspolarisator entlang des Strahlengangs hintereinander angeordnet. Der hierbei verwendete Zirkularpolarisator umfasst beispielsweise in einer an sich bekannten Weise einen Linear-Polarisationsfilter sowie ein λ/4-Plättchen. Aufgrund dieses Aufbaus sind im Grunde genommen wiederum zwei Linearpolarisatoren hintereinander im Strahlengang angeordnet, so, dass diesbezüglich die oben getroffenen Aussagen zur Wirkungsweise und der Verstellung auch bei dieser Ausgestaltung zutreffen, insbesondere dann, wenn entlang eines Strahlengangs erst ein Linearpolarisator und dann ein Zirkularpolarisator angeordnet sind. Das Licht passiert dann nämlich die Komponenten in der folgenden Reihenfolge: Linearpolarisator-Zirkularpolarisator, was gleichbedeutend ist mit: Linearpolarisator-Linearpolarisator - λ/4-Plättchen. In diesem Falle kann ein Aufbau realisiert werden, bei dem zirkular polarisiertes Licht auf die Bildaufnahmevorrichtung auftrifft, so, dass die Feldvektoren des Lichtes, das auf die Bildaufnahmevorrichtung auftrifft, keine Vorzugsorientierung aufweisen.

Gemäss weiterer Ausführungsformen umfasst das vorliegend beschriebene optische Inspektionssystem eine Transportvorrichtung für Prüflinge, wobei die Transportvorrichtung geeignet ist, um Prüflinge in das Inspektionsvolumen hinein und wieder aus dem Inspektionsvolumen heraus zu transportieren. Der Transport kann beispielsweise entlang eines Transportweges erfolgen, wobei insbesondere an beiden Seiten des Transportweges jeweils wenigstens ein Seitenansicht-Strahlumlenkelement angeordnet sein kann. In spezifischeren Ausgestaltungen kann die Transportvorrichtung bereitgestellt sein, um Prüflinge entlang des Transportweges durch das Inspektionsvolumen zu transportieren. Wie erwähnt, kann vorgesehen sein, dass an beiden Seiten des Transportweges jeweils wenigstens ein Seitenansicht-Strahlumlenkelement angeordnet ist. Insbesondere sind gesamthaft wenigstens drei Seitenansicht-Strahlumlenkelemente angeordnet, wobei diese derart angeordnet sind, um einen gesamten um die Draufsichtrichtung umlaufenden Seitenumfang eines Prüflings auf die Bildaufnahmevorrichtung zu projizieren. Die Transportvorrichtung ist gemäss spezifischen Ausführungsformen ein Transportband, auf dem die Prüflinge aufliegen. Die Draufsichtrichtung ist von oben auf das Transportband gerichtet. Das Transportband begrenzt insofern das Inspektionsvolumen in distaler Richtung. Die Seitenansicht-Strahlumlenkelemente erstrecken sich in distaler Richtung wenigstens bis zu einer Ebene des Transportbandes.

Die Transportvorrichtung kann insbesondere vorgesehen sein, Prüflinge entlang eines Transportweges durch das Inspektionsvolumen zu fördern. Das hier beschriebene Verfahren umfasst in diesem Fall, eine Mehrzahl von Prüflingen entlang eines Transportweges durch das Inspektionsvolumen zu fördern. Dabei kann vorgesehen sein, eine Mehrzahl von Prüflingen in einer stetigen Bewegung durch das Inspektionsvolumen zu fördern. Entsprechend kann die Transportvorrichtung derart ausgeführt sein, um Prüflinge in einer stetigen Bewegung entlang eines Transportweges durch das Inspektionsvolumen zu fördern. In diesem Falle bewegen sich die Prüflinge durch das Inspektionsvolumen, und die optische Inspektion wird an einem sich bewegenden Prüfling ausgeführt. Die Transportvorrichtung ist in diesem Falle beispielsweise ein sich stetig bewegendes Transportband. Es kann beispielsweise auch vorgesehen sein, dass die Prüflinge in einer unstetigen und/oder intermittierenden und/oder getakteten Bewegung in das Inspektionsvolumen hinein und wieder aus dem Inspektionsvolumen heraus transportiert werden. Die Transportvorrichtung kann in diesem Falle beispielsweise ein sich getaktet bewegendes Transportband sein. Die Transportvorrichtung kann in diesem Falle auch beispielsweise ein Greifarm oder eine andere Vorrichtung sein, die einen Prüfling in das Inspektionsvolumen hinein transportiert und den Prüfling danach wieder aus dem Inspektionsvolumen hinaus transportiert. In diesem Falle kann vorgesehen sein, dass der Prüfling über eine gewisse Zeitdauer statisch im Inspektionsvolumen verweilt, und der Inspektionsvorgang an einem statischen Prüfling durchgeführt wird. Es kann weiter vorgesehen sein, dass der Prüfling innerhalb des Inspektionsvolumens während des Inspektionsvorgangs bewegt wird und/oder das Sichtfeld des Inspektionssystems sich über den Prüfling bewegt, derart, dass ein Prüfling abgescannt wird. Selbstverständlich sind die oben genannten Beispiele nicht als einschränkend und abschliessend zu verstehen.

Die oben dargestellten Ausgestaltungen der beschriebenen Gegenstände können selbstverständlich untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine Schnittdarstellung einer Seitenansicht einer ersten Ausführungsform des vorliegend beschriebenen optischen Inspektionssystems mit einem Prüfling und ausgewählten Strahlengängen;
- Fig. 2: eine Schnittdarstellung einer Seitenansicht einer zweiten Ausführungsform des vorliegend beschriebenen optischen Inspektionssystems mit einem Prüfling und ausgewählten Strahlengängen;
- Fig. 3: eine Schnittdarstellung einer Ausführungsform analog zu derjenigen in Figur 2, mit einer Anordnung von zwei Polarisationsfiltern als Vorrichtung zur variablen Abschwächung der Lichtintensität;
- Fig. 4: eine Darstellung der Anordnung der optischen Komponenten eines optischen Inspektionssystems der vorliegend beschriebenen Art; und
- Fig. 5: eine Illustration eines Ausschnitts einer Abbildung eines Prüflings auf der Bildaufnahmevorrichtung eines optischen Inspektionssystems der vorliegend beschriebenen Art.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

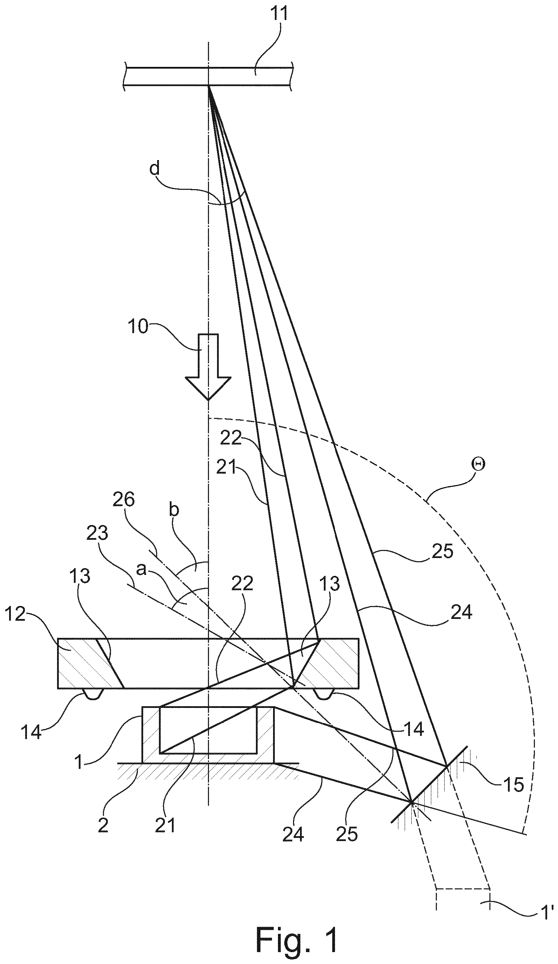

Figur 1 zeigt eine erste beispielhafte Ausführungsform eines optischen Inspektionssystems für einen Prüfling 1. Der Prüfling ist beispielhaft eine Verschlusskappe für eine Getränkeflasche. Der Prüfling ist auf einer Unterlage 2 angeordnet, welche einerseits als Positionierungsmittel für den Prüfling wirkt, und andererseits ein Inspektionsvolumen distal begrenzt. Wie in der Schnittdarstellung erkennbar ist, weist die Verschlusskappe einen Hohlraum auf, der an seinem Umfang von Innenwänden begrenzt ist. Das Sichtfeld einer Bildaufnahmevorrichtung 11 ist entlang der Sichtrichtung der Bildaufnahmevorrichtung bzw. entlang einer Draufsichtrichtung 10 auf den Prüfling 1 gerichtet. In Draufsichtrichtung 10 proximal vom Prüfling respektive vom Inspektionsvolumen ist ein Halteelement 12 angeordnet, an welchem Innenansicht-Strahlumlenkelemente 13 angeordnet sind. Die Innenansicht-Strahlumlenkelemente 13 sind hierzu derart angeordnet, dass Strahlen, die von der Innenwand der Verschlusskappe ausgehen, so umgelenkt werden, dass sie sich innerhalb des Sichtfeldes der Bildaufnahmevorrichtung 11 befinden. Auf diese Weise wird eine Innenwand der Verschlusskappe 1 durch ein Innenansicht-Strahlumlenkelement 13 auf die Bildaufnahmevorrichtung 11 projiziert. Beispielhaft sind zwei Strahlengänge 21 und 22 dargestellt, die von einer Innenwand der Verschlusskappe ausgehen und auf die Bildaufnahmevorrichtung 11 treffen. Das Strahlumlenkelement ist hierzu derart ausgestaltet und angeordnet, dass eine Winkelhalbierende 23 einer Strahlumlenkung bei der Projektion der Innenansicht des Prüflings auf die Bildaufnahmevorrichtung 11 mit der Draufsichtrichtung einen Winkel a von wenigstens 45° einschliesst. Im dargestellten Ausführungsbeispiel sind die Innenansicht-Strahlumlenkelemente 13 ebene Spiegel, derart, dass die genannte Winkelhalbierende der Strahlumlenkung mit der Flächennormalen des Spiegels identisch ist. Auf einer distalen, von der Bildaufnahmevorrichtung 11 abgewandten, Seite des Halteelements 12 sind weiterhin Beleuchtungsmittel 14 angeordnet, um insbesondere die Aussenansicht des Prüflings zu beleuchten. Die Beleuchtungsmittel 14 können beispielsweise LED-Leuchtelemente sein. Weiterhin sind bezogen auf die Draufsichtrichtung seitlich des Inspektionsvolumens Seitenansicht-Strahlumlenkelemente 15 angeordnet, von denen ein einzelnes beispielhaft dargestellt ist. Diese sind derart angeordnet, dass ein Strahlengang, der von einer seitlichen Aussenansicht des Prüflings ausgeht, so umgelenkt wird, dass sich der umgelenkte Strahlengang innerhalb des Sichtfelds befindet und somit die seitliche Aussenansicht auf die Bildaufnahmevorrichtung projiziert wird. Beispielhaft sind zwei Strahlengänge 24 und 25 von der Aussenansicht des Prüflings zur Bildaufnahmevorrichtung 11 dargestellt. Der Strahlengang 25 stellt im vorliegenden Ausführungsbeispiel beispielsweise eine Begrenzung des Sichtfeldes dar. In einer scheinbaren Verlängerung der Strahlengänge zwischen der Bildaufnahmevorrichtung 11 und dem Seitenansicht-Strahlumlenkelement 15 befindet sich hinter dem Seitenansicht-Strahlumlenkelement 15 ein virtuelles Bild 1' des Prüflings 1. Dies ist die scheinbare Position, an der die Bildaufnahmevorrichtung 11 die Aussenansicht des Prüflings sieht. Wie zu erkennen ist, ist das virtuelle Bild jedes Objektpunktes des Prüflings 1 weiter distal, also entlang der Draufsichtrichtung weiter von der Bildaufnahmevorrichtung entfernt, angeordnet als der jeweilige Objektpunkt des realen Prüflings. Im Falle eines ebenen Spiegels als Seitenansicht-Strahlumlenkelement ist weiterhin ein virtueller Bildpunkt gleich weit von der umlenkenden Spiegelfläche entfernt wie der jeweilige Objektpunkt am realen Prüfling. Mit d ist ein Öffnungshalbwinkel des Sichtfeldes bezeichnet. Dabei ist das Seitenansicht-Strahlumlenkelement im vorliegenden Ausführungsbeispiel derart angeordnet und positioniert, um die seitliche Aussenansicht des Prüflings in einer Sichtrichtung mit einem Polarwinkel Θ von wenigstens 90°, gemessen von der Draufsichtrichtung, auf die Bildaufnahmevorrichtung zu projizieren. Hierzu ist das Seitenansicht-Strahlumlenkelement derart angeordnet und positioniert, dass eine Winkelhalbierende 26 der Strahlumlenkung bei der Projektion der Seitenansicht des Prüflings auf die Bildaufnahmevorrichtung mit der Draufsichtrichtung einen Winkel b von höchstens 45°plus der Hälfte des Öffnungshalbwinkels d des Sichtfeldes einschliesst. In bestimmten Ausführungsformen ist das Seitenansicht-Strahlumlenkelement derart angeordnet und positioniert, dass der Winkel b höchstens 45° beträgt oder kleiner als 45° ist. Im vorliegenden Ausführungsbeispiel ist das Seitenansicht-Strahlumlenkelement ein ebener Spiegel, und die genannte Winkelhalbierende ist mit der Flächennormalen des Spiegels identisch. Weiterhin erstreckt sich das Seitenansicht-Strahlumlenkelement weiter nach distal als die Position einer distalen Begrenzung des Inspektionsvolumens, die in diesem Falle durch die Unterlage 2 gegeben ist. Das Seitenansicht-Strahlumlenkelement muss selbstverständlich in einem Bereich des Sichtfeldes der Bildaufnahmevorrichtung angeordnet sein, in dem es nicht von einem Innenansicht-Strahlumlenkelement bzw. dem Halteelement 12 abgeschattet ist. Erkennbar ist weiterhin, dass bei der dargestellten Anordnung ein Bereich zwischen den Strahlen 24 und 22 keine relevante Information enthält, da lediglich eine proximale Seite des Halteelements 12 abgebildet wird. Mit anderen Worten, ein Teil der physischen Bildpunkte oder Pixel der Bildaufnahmevorrichtung enthält keine verwertbare Information. Dies verschlechtert die Gesamtauflösung der abgebildeten Bereiche des Prüflings.

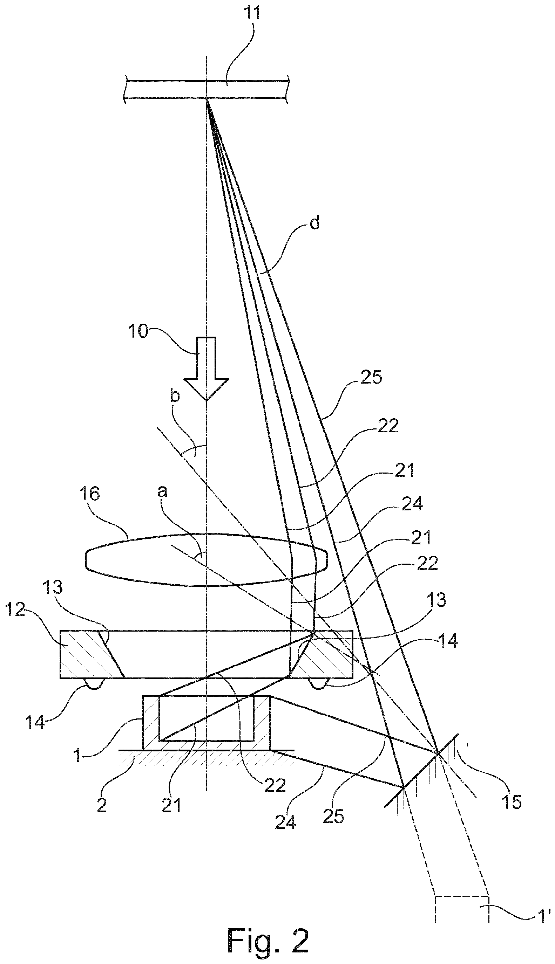

Aus diesem Grunde ist in Figur 2 in einer weiteren Ausführungsform des optischen Inspektionssystems proximal von den Innenansicht-Strahlumlenkelementen 13 eine Sammellinse 16 angeordnet, welche als Lupe fungiert. Die Brennweite dieser Linse ist grösser als der Abstand der Linse 16 von einer distalen Begrenzung des Inspektionsvolumens, die in diesem Beispiel, wie oben erwähnt, durch die Auflagefläche 2 gegeben ist. Auf diese Weise erzeugt die Sammellinse 16 ein vergrössertes aufrechtstehendes virtuelles Bild des Prüflings, bzw. der Abbildungen des Prüflings durch die Innenansicht-Strahlumlenkelemente. Ebenso sind die Strahlengänge 21 und 22 näher an die Strahlengänge 24 und 25 der Seitenansicht herangerückt, derart, dass der Bereich ohne relevante Information signifikant verkleinert oder gar vollständig vermieden werden kann.

In den Figuren 1 und 2 sind jeweils nur die Strahlengänge auf einer Seite dargestellt, und es ist nur ein Seitenansicht-Strahlumlenkelement 15 dargestellt. Es versteht sich von selbst, dass sowohl die Innenansicht-Strahlumlenkelemente als auch die Seitenansicht-Strahlumlenkelemente derart angeordnet und positioniert sind, um sowohl den gesamten Innenumfang als auch den gesamten Aussenumfang des Prüflings abzubilden. Dazu können die Strahlumlenkelemente beispielsweise kegelstumpfförmig oder als Abschnitt eines Kegelstumpfes angeordnet sein, und/oder es können um den Umfang des Prüflings verteilt eine Mehrzahl Innenansicht-Strahlumlenkelemente und/oder Seitenansicht-Strahlumlenkelemente angeordnet sein. Beispielsweise erfolgt die Anordnung von Seitenansicht-Strahlumlenkelementen analog zur Anordnung der Kameras in der Figur 2 der EP 2 112 502, welche insofern einen integrierenden Bestandteil der vorliegenden Offenbarung darstellt. Die Anordnung der Innenansicht-Strahlumlenkelemente kann vollkommen analog erfolgen.

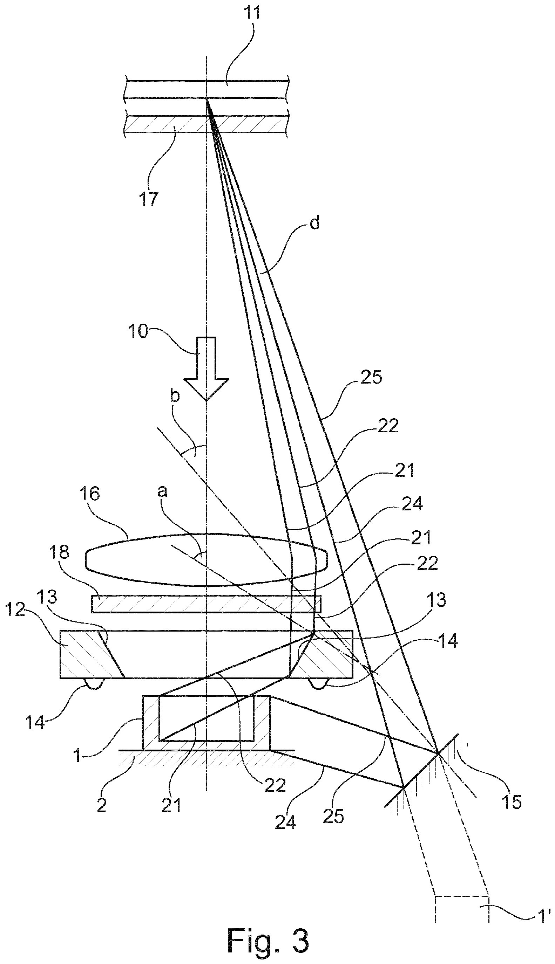

Die in der Figur 3 dargestellte Ausführungsform unterscheidet sich von derjenigen der Figur 2 dadurch, dass in dem Bereich des Sichtfelds, der auf die Innenansicht bzw. die Draufsicht des Prüflings gerichtet ist, zwei Polarisationsfilter 17 und 18 angeordnet sind. Die Polarisationsfilter 17 und 18 sind jeweils senkrecht zur Draufsichtrichtung 10 angeordnet und entlang der Draufsichtrichtung 10 voneinander beabstandet und mit ihren optischen Achsen entlang eines Strahlengangs der Projektion des Prüflings orientiert. Im Weiteren sind die Polarisationsfilter Linearpolarisatoren oder eine Kombination aus Linear- und Zirkularpolarisatoren. Der erste Polarisationsfilter 17 ist unmittelbar vor der Bildaufnahmevorrichtung 11 angeordnet, so, dass alle Strahlengänge, die auf die Bildaufnahmevorrichtung 11 treffen, den ersten Polarisationsfilter 17 passieren müssen. Der zweite Polarisationsfilter 18 ist distal vom ersten Polarisationsfilter und in diesem Ausführungsbeispiel distal von der Sammellinse 16 angeordnet. In einer beispielhaften Ausführungsform ist der erste Polarisationsfilter 17 ein Zirkularpolarisator, während der zweite, distal angeordnete, Polarisationsfilter 18 ein Linearpolarisator ist. Dabei ist die Querschnittsabmessung des zweiten Polarisationsfilters derart bemessen, dass die Strahlengänge von der Innenansicht und/oder Draufsicht des Prüflings 1 den zweiten Polarisationsfilter 18 passieren, jedoch nicht die Strahlengänge von der Aussenansicht des Prüflings. Es ist vorgesehen, dass wenigstens einer der Polarisationsfilter 17 und 18 um eine Achse, welche zur Draufsichtrichtung 10 parallel verläuft, drehbar ist. Damit können die Polarisationsebenen der linearen Polarisationsfilter 17 und 18 bzw. des linearen Polarisationsfilters 18 und des Linearpolarisators im zirkularen Polarisationsfilter 17 in unterschiedliche Winkellagen zueinander gebracht werden. Werden die Polarisationsebenen der Polarisationsfilter 17 und 18 parallel zueinander eingestellt, wird die Innenansicht und/oder Draufsicht des Prüflings mit einer maximalen Lichtintensität auf die Bildaufnahmevorrichtung 11 projiziert. Werden hingegen die Polarisationsfilter 17 und 18 relativ zueinander um eine Achse, die zur Draufsichtrichtung 10 parallel ist, verdreht, so wird ein Teil des Lichts, das den zweiten Polarisationsfilter 18 passiert hat, im ersten Polarisationsfilter 17 geblockt, und die Strahlengänge von der Innenansicht und/oder Draufsicht des Prüflings werden abgedunkelt. Auf diese Weise ist eine Vorrichtung zur variablen Abschwächung der Lichtintensität der Strahlengänge, die von der Innenansicht und/oder Draufsicht des Prüflings kommen, realisiert. Wie erwähnt, kann hier auch eine geeignete Kombination aus einem Linear- und einem Zirkularpolarisator Verwendung finden. Die Strahlengänge der Seitenansicht hingegen passieren nur einen der Polarisationsfilter, und deren Lichtintensität ist daher durch die genannte Vorrichtung nicht beeinflussbar. Auf diese Weise ist es ermöglicht, die Helligkeit der Abbildungen der Aussenansicht sowie der Innenansicht und/oder Draufsicht des Prüflings derart aneinander anzupassen, dass alle Ansichten sich auf der Bildaufnahmevorrichtung in etwa auf dem gleichen Intensitätslevel bewegen. Auf diese Weise ist es ermöglicht, alle Ansichten mit einer bestmöglichen Ausnutzung des Dynamikumfangs der Bildaufnahmevorrichtung zu erfassen und auszuwerten.

Die in der Figur 3 beispielhaft dargestellte Anordnung zweier mit ihren Polarisationsebenen gegeneinander verdrehbaren Polarisationsfilter stellt dabei nur eine Möglichkeit dar, eine Vorrichtung zur variablen Abschwächung der Lichtintensität bereitzustellen. Ebenso ist es im Rahmen der vorliegend offenbarten Lehre durchaus möglich, sofern Polarisationsfilter Verwendung finden, die Polarisationsfilter auch an anderen Stellen innerhalb der Strahlengänge anzuordnen; entscheidend ist, dass in einem Strahlengang zwei Linearpolarisatoren oder eine Kombination aus Linear- und Zirkularpolarisatoren hintereinander angeordnet sind, die um ihre optischen Achsen relativ zueinander verdrehbar sind.

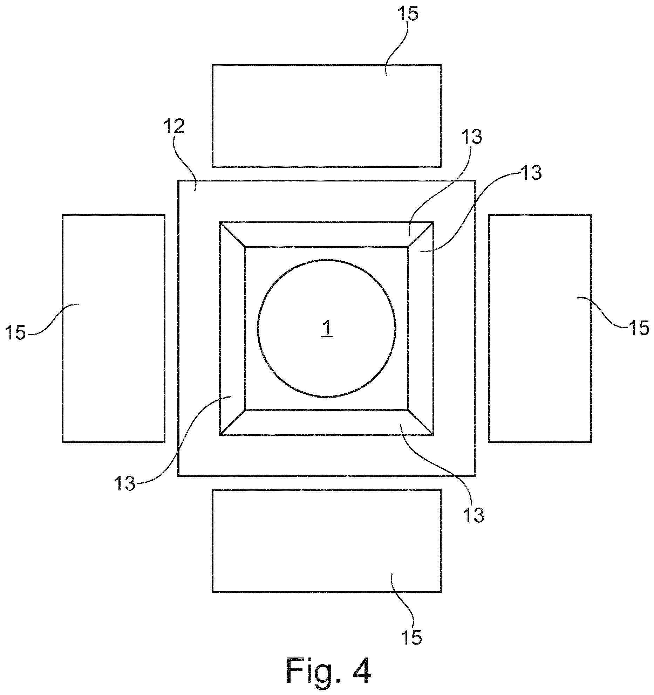

In der Figur 4 ist eine beispielhafte Anordnung der Strahlumlenkelemente in der Draufsicht dargestellt. Beispielsweise sind in diesem Falle vier Innenansicht-Strahlumlenkelemente und vier Seitenansicht-Strahlumlenkelemente um den Umfang des Prüflings 1 bzw. des Inspektionsvolumens verteilt angeordnet. Wie erwähnt, können statt ebener Spiegel auch anders ausgestaltete Spiegel Verwendung finden. Ebenso kann auch eine Anordnung von nur drei Innenansicht-Strahlumlenkelementen oder Seitenansicht-Strahlumlenkelementen ausreichend sein, um den gesamten Umfang des Prüflings bzw. des Inspektionsvolumens abzubilden, wie dies in der bereits angeführten EP 2 112 502, dort in der Figur 2, dargestellt ist.

Im Zusammenhang mit den Ausführungen zu den Figuren 1 bis 4 erkennt der Fachmann, dass die Definition des Inspektionsvolumens keineswegs willkürlich erfolgt, sondern eine Schnittmenge aller durch die Bilderfassungsvorrichtung und die Strahlumlenkelemente vorgegebenen Sichtfelder ist.

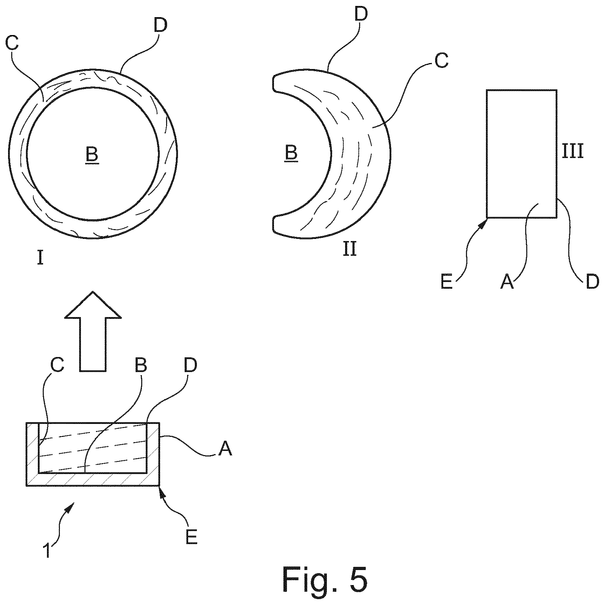

In der Figur 5 ist in einem Beispiel die Abbildung einer Verschlusskappe 1 durch die in der Figur 2 oder Figur 3 dargestellten Strahlengänge erläutert. Die Verschlusskappe weist in der dargestellten Anordnung eine Aussenseite A, einen inneren Boden B, eine Innenwand C mit angedeuteten Gewindegängen, einen oberen Rand D und eine untere Begrenzungskante E auf. Bei der Abbildung auf die Bildaufnahmevorrichtung ist zentral eine direkte, senkrechte Draufsicht I auf den Prüfling abgebildet. Dabei ist der Boden B zu erkennen, sowie der obere Rand D. Aufgrund der Divergenz des Sichtfeldes ist weiterhin auch die Innenwand C mit den Gewindegängen in einer perspektivischen Verkürzung erkennbar. Rechts neben der zentralen Ansicht ist bei II ein Teil der Innenwand sowie ein Teil des inneren Bodens durch ein Innenansicht-Strahlumlenkelement abgebildet. Dabei ist der abgebildete Teil der Innenwand derjenige, der in der zentralen Ansicht links liegt. Ganz rechts aussen ist schliesslich bei III die äussere Seitenansicht der Verschlusskappe durch ein Seitenansicht-Strahlumlenkelement abgebildet. Dabei sind die Aussenseite A, der obere Rand D, sowie die untere Begrenzungskante E sichtbar. Der Einfachheit halber sind in der Figur 5 nur die zentrale Abbildung 1 sowie die Abbildung II über ein Innenansicht-Umlenkelement und die Abbildung III über ein Seitenansicht-Umlenkelement dargestellt. Für den Fachmann ergibt es sich vollkommen zwanglos, wie diese Abbildung ergänzt wird, wenn entsprechend mehrere oder anders ausgestaltete Innenansicht-Strahlumlenkelemente und Seitenansicht-Strahlumlenkelemente angeordnet sind, um sowohl die Innenwand C als auch die Aussenseite A der Verschlusskappe am gesamten Umfang abzubilden.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

### BEZUGSZEICHENLISTE

- 1: Prüfling; Verschlusskappe
- 1': Bild des Prüflings, virtuelles Bild des Prüflings
- 2: Unterlage
- 10: Draufsichtrichtung
- 11: Bildaufnahmevorrichtung
- 12: Halteelement
- 13: Innenansicht-Strahlumlenkelement
- 14: Beleuchtungsmittel
- 15: Seitenansicht-Strahlumlenkelement
- 16: Sammellinse, Lupe
- 17: Polarisationsfilter
- 18: Polarisationsfilter
- 21: Strahlengang
- 22: Strahlengang
- 23: Winkelhalbierende der Strahlumlenkung bei der Projektion einer Innenansicht
- 24: Strahlengang
- 25: Strahlengang
- 26: Winkelhalbierende der Strahlumlenkung bei der Projektion einer Aussenansicht

- a: Winkel
- b: Winkel
- d: Öffnungshalbwinkel des Sichtfeldes

- A: Aussenseite eines Prüflings
- B: innerer Boden eines Prüflings
- C: Innenwand des Prüflings
- D: oberer Rand des Prüflings
- E: untere Begrenzungskante

- I: Draufsicht
- II: Innenansicht
- III: äussere Seitenansicht

- Θ: Polarwinkel

## Patentansprüche

1. Optisches Inspektionssystem, umfassend eine Bildaufnahmevorrichtung (11), wobei ein Sichtfeld der Bildaufnahmevorrichtung entlang einer Draufsichtrichtung (10) zu einem Inspektionsvolumen hin gerichtet ist, wobei im Sichtfeld und in Draufsichtrichtung proximal vom Inspektionsvolumen wenigstens ein Innenansicht-Strahlumlenkelement (13) angeordnet ist, wobei das Innenansicht-Strahlumlenkelement derart ausgeführt ist, um, wenn sich ein Prüfling (1) im Inspektionsvolumen befindet, Innenwände (C), die einen Hohlraum des Prüflings begrenzen, auf die Bildaufnahmevorrichtung (11) zu projizieren, wenn sich der Prüfling derart im Inspektionsvolumen befindet, dass der Hohlraum zur Draufsichtrichtung hin offen ist,
wobei weiterhin innerhalb des Sichtfeldes wenigstens ein Seitenansicht-Strahlumlenkelement (15) angeordnet ist, welches, bezogen auf die Draufsichtrichtung, seitlich des Inspektionsvolumens angeordnet ist, und das Seitenansicht-Strahlumlenkelement weiterhin derart angeordnet und positioniert ist, um eine, bezogen auf die Draufsichtrichtung, seitliche Aussenansicht eines Prüflings, der sich im Inspektionsvolumen befindet, in das Sichtfeld umzulenken und auf die Bildaufnahmevorrichtung zu projizieren, derart, dass ein Strahlengang (24, 25), der von einer seitlichen Aussenansicht (A) eines im Inspektionsvolumen befindlichen Prüflings ausgeht, durch das Seitenansicht-Strahlumlenkelement so umgelenkt wird, dass der genannte umgelenkte Strahlengang sich innerhalb des Sichtfelds befindet, und die seitliche Aussenansicht auf die Bildaufnahmevorrichtung projiziert wird, wobei das Seitenansicht-Strahlumlenkelement in einem Bereich des Sichtfeldes angeordnet ist, der nicht von dem Innenansicht-Strahlumlenkelement abgeschattet ist,
und wobei weiterhin die Bildaufnahmevorrichtung (11) wenigstens eine Lichtfeldkamera umfasst.

2. Optisches Inspektionssystem gemäss dem vorstehenden Anspruch, wobei das Seitenansicht-Strahlumlenkelement (15) derart anordenbar und positionierbar ist, um die seitliche Aussenansicht (A) eines Prüflings, der sich im Inspektionsvolumen befindet, in einer Sichtrichtung mit einem Polarwinkel (Θ) von wenigstens 90°, gemessen von der Draufsichtrichtung (10), auf die Bildaufnahmevorrichtung (11) zu projizieren.

3. Optisches Inspektionssystem gemäss Anspruch 1, wobei das wenigstens eine Seitenansicht-Strahlumlenkelement sich entlang der Draufsichtrichtung wenigstens bis zu einer distalen Begrenzung des Inspektionsvolumens erstreckt.

4. Optisches Inspektionssystem gemäss einem der vorstehenden Ansprüche, wobei eine distale Begrenzung des Inspektionsvolumens in der Draufsichtrichtung relativ zur Lage eines Positionierungsmittels (2) für einen Prüfling definiert ist.

5. Optisches Inspektionssystem gemäss einem der vorstehenden Ansprüche, wobei das wenigstens eine Seitenansicht-Strahlumlenkelement (15) derart anordenbar und vorgesehen ist um ein virtuelles Bild einer seitlichen Aussenansicht eines im Inspektionsvolumen befindlichen Prüflings (1) zu erzeugen, wobei das virtuelle Bild jedes Objektpunktes des Prüflings in Draufsichtrichtung (10) weiter distal angeordnet ist als der jeweilige Objektpunkt am realen Objekt.

6. Optisches Inspektionssystem gemäss einem der vorstehenden Ansprüche, wobei das wenigstens eine Seitenansicht-Strahlumlenkelement (15) derart ausgeführt und anordenbar ist, dass eine Winkelhalbierende (26) der Strahlumlenkung bei der Projektion der Seitenansicht eines im Inspektionsvolumen befindlichen Prüflings auf die Bildaufnahmevorrichtung mit der Draufsichtrichtung (10) einen Winkel (b) einschliesst, der kleiner oder gleich 45° plus die Hälfte eines Öffnungshalbwinkels (d) des Sichtfeldes ist, und der insbesondere kleiner oder gleich 45° ist.

7. Optisches Inspektionssystem gemäss einem der vorstehenden Ansprüche, wobei das wenigstens eine Innenansicht-Strahlumlenkelement (13) derart ausgeführt und anordenbar ist, dass eine Winkelhalbierende (23) der Strahlumlenkung bei der Projektion einer Innenansicht eines im Inspektionsvolumen befindlichen Prüflings auf die Bildaufnahmevorrichtung mit der Draufsichtrichtung (10) einen Winkel (a) einschliesst, der grösser oder gleich 45° ist, und der insbesondere grösser oder gleich 45° plus der Hälfte eines Öffnungshalbwinkels (d) des Sichtfeldes ist..

8. Optisches Inspektionssystem gemäss einem der vorstehenden Ansprüche, wobei im Sichtfeld und in Draufsichtrichtung proximal vom Innenansicht-Strahlumlenkelement eine Vergrösserungsoptik (16) angeordnet ist, welche die Abbildung der von den Innenansicht-Strahlumlenkelementen auf die Bildaufnahmevorrichtung projizierten Objektbereiche vergrössert.

9. Optisches Inspektionssystem gemäss einem der vorstehenden Ansprüche, welches eine Vorrichtung (17, 18) zur variablen Abschwächung einer Lichtintensität umfasst, wobei die Vorrichtung zur variablen Abschwächung der Lichtintensität in einem Strahlengang angeordnet ist, über die entweder eine Innenansicht und/oder Draufsicht des Prüflings oder die Aussenansicht des Prüflings auf die Bildaufnahmevorrichtung abgebildet wird.

10. Verfahren zur optischen Inspektion eines Prüflings (1), umfassend, einen Prüfling in ein Inspektionsvolumen einzubringen, das Sichtfeld einer Bildaufnahmevorrichtung (11) entlang einer Draufsichtrichtung (10) auf das Inspektionsvolumen zu richten,
eine Seitenansicht (A) des Prüflings auf die Bildaufnahmevorrichtung zu projizieren,
wenigstens eine schräg zur Draufsichtrichtung (10) orientierte Draufsicht des Prüflings auf die Bildaufnahmevorrichtung zu projizieren, und mit der Bildaufnahmevorrichtung die Ansichten des Prüflings derart aufzunehmen, dass Abbildungen des Prüflings mit unterschiedlichem Schärfeabstand von der Bildaufnahmevorrichtung zur Verfügung gestellt werden können.

11. Verfahren gemäss dem vorstehenden Anspruch, wobei mittels der Bildaufnahmevorrichtung wenigstens ein 4D-Lichtfeld des Prüflings aufgenommen wird.

12. Verfahren gemäss einem der vorstehenden Ansprüche, umfassend, die aufgenommenen Abbildungen derart weiterzuverarbeiten, dass alle abgebildeten Bereiche des Prüflings scharf abgebildet sind.

13. Verfahren gemäss einem der vorstehenden Verfahrensansprüche, umfassend, die Draufsicht durch ein Abbildungssystem (16) zu vergrössern.

14. Verfahren gemäss einem der vorstehenden Verfahrensansprüche, umfassend, die Strahlengänge, entlang der eine erste der Ansichten des Prüflings auf die Bildaufnahmevorrichtung projiziert wird, durch eine Vorrichtung zur variablen Abschwächung der Lichtintensität zu führen, die Bildhelligkeit an der Bildaufnahmevorrichtung derart einzustellen, dass die Helligkeit der Abbildung einer zweiten der Ansichten des Prüflings in einem Sollintervall liegt, und die variable Abschwächung der Lichtintensität derart einzustellen, dass die Helligkeit der Abbildung der ersten Ansicht des Prüflings ebenfalls innerhalb des Sollintervalls liegt.

15. Verfahren gemäss einem der vorstehenden Verfahrensansprüche, umfassend, eine Mehrzahl von Prüflingen entlang eines Transportwegs durch das Inspektionsvolumen zu fördern.
